Europäisches Patentamt

European Patent Office

Office européen des brevets

(19)

(11) **EP 0 763 800 A2**

(12) **EUROPÄISCHE PATENTANMELDUNG**

(43) Veröffentlichungstag:
**19.03.1997 Patentblatt 1997/12**

(51) Int. Cl.⁶: **G06T 7/20**

(21) Anmeldenummer: **96113045.7**

(22) Anmeldetag: **14.08.1996**

(84) Benannte Vertragsstaaten:
**BE DE ES FR GB IT NL SE**

(30) Priorität: **15.09.1995 DE 19534230**

(71) Anmelder: **DAIMLER-BENZ AKTIENGESELLSCHAFT**
**70546 Stuttgart (DE)**

(72) Erfinder:
 • **Heisele, Bernd**
  **73614 Schorndorf (DE)**
 • **Ritter, Werner**
  **89077 Ulm (DE)**

(74) Vertreter: **Weber, Gerhard, Dipl.-Phys.**
 **AEG Aktiengesellschaft**
 **60591 Frankfurt (DE)**

(54) **Verfahren zur Erkennung von Objekten in zeitveränderlichen Bildern**

(57)  Es wird ein Verfahren zur Erkennung von Objekten in zeitlich veränderlichen Bildern einer optisch überwachten Szene beschrieben, welches auf der Basis mehrfarbiger Bilder innerhalb eines Bildes zusammenhängende Flächen einheitlicher Farbe ermittelt und für einander entsprechende Flächen in zeitlich aufeinanderfolgenden Bildern jeweils einen Bewegungsvektor bestimmt. Gleichförmig bewegte benachbarte Flächen können zu Bewegungsobjekten zusammengefaßt und z.B. bei einer nachfolgenden Objektklassifikation gemeinsam bearbeitet werden. Das Verfahren ist insbesondere vorteilhaft anwendbar in der Straßenverkehrautomatisierung.

FIG. 1

EP 0 763 800 A2

## Beschreibung

Die Erfindung betrifft ein Verfahren zum Erkennen von Objekten in zeitveränderlichen Bildern einer optisch überwachten Szene.

Die optische Überwachung einer Szene und die Erkennung darin befindlicher Objekte sind von wesentlicher Bedeutung bei verschiedenen Formen der Verkehrleittechnik, insbesondere der automatischen Hinderniserkennung zur Kollisionsverhütung. Für solche Anwendungsfälle kann die Anordnung eines bildaufnehmenden optischen Sensors (Kamera) in einem bewegten Fahrzeug zur Überwachung des in Fahrtrichtung vorausliegenden Teilraums als Ausgangssituation angenommen werden. Relevant sind dann insbesondere bewegte andere Fahrzeuge sowie feststehende Objekte wie Fahrbahnbegrenzungen und -markierungen, Schilder, Hindernisse auf der Fahrbahn. Die feststehenden Objekte sind aufgrund der Eigengeschwindigkeit des Fahrzeugs diesem gegenüber bewegt und verändern dadurch ständig ihre Position in dem von der Kamera aufgenommenen Bild.

Die Aufnahmen liegen im Regelfall als digitalisierte Bilddaten zeitlich aufeinanderfolgender zweidimensionaler Rasterbilder mit Helligkeits- und/oder Farbinformationen zu den einzelnen Pixeln vor. Die relevanten Objekte nehmen dabei im Regelfall nur einen geringen Anteil an dem gesamten Bildinhalt ein. Die Objekterkennung muß daher einen geringen Anteil relevanter Information von einem weit überwiegenden Anteil irrelevanter Information trennen.

Hierfür ist es z.B. bekannt, für Objekte oder Objektklassen charakteristische Linienanordnungen oder Symmetrieeigenschaften, z.B. für den Heckbereich vorausfahrender Fahrzeuge vorzugeben und in den aufgenommenen Bildern zu detektieren [1],[2]. Während solche Vorgehensweisen in Umgebungen mit einfach strukturierter Umgebung wie z.B. auf Autobahnen teilweise gute Ergebnisse liefern, ist die Funktion in variationsreicherer Umgebung wie Landstraßen eher unbefriedigend.

Ein anderer Ansatz [3][4] benutzt eine Stereo-Bildaufnahme und schätzt über die Verknüpfung räumlich getrennt aufgenommener Einzelbilder die Entfernung für signifikante Bildteile wie Kanten und Ecken. Eine so entstehende räumliche Merkmalskarte weist aber häufig zuwenige Einträge für die zuverlässige Erkennung und Klassifizierung auf.

Davon verschieden sind Verfahren, welche Objekte aufgrund ihrer Bewegung in den aufgenommenen Bildern detektieren. Eine einfache Methode, welche die Differenz zwischen aktuellen Aufnahmen und Hintergrundbildern auswertet [5], ist wegen der stationär einzusetzenden Kamera für die meisten Anwendungen nicht geeignet. Die meisten auf Bewegungsinformation basierenden Verfahren werten dagegen Bildverschiebungen aus. Hierbei sind wiederum kontinuierliche und diskrete Vorgehensweisen zu unterscheiden.

Die kontinuierlichen Verfahren erzeugen üblicherweise für jeden Pixel einen Verschiebungsvektor durch Berechnung eines räumlich-zeitlichen Gradienten einer lokalen Intensitätsverteilung [6]. Die dabei benutzte Glättung führt zu Fehlern an Diskontinuitäten des Bewegungsvektorfeldes und erschwert eine bewegungsbasierte Segmentierung.

Die diskreten Verfahren greifen auf signifikante Bildteile wie Ecken [7] und lokale Intensitätsmaxima und -minima zurück, deren Lage in zeitlich aufeinanderfolgenden Aufnahmen verfolgt wird, um Verschiebungsvektoren zu erzeugen. Die so gewonnenen Verschiebungsvektoren sind zwar sehr genau, das Vektorfeld ist aber häufig nicht dicht genug besetzt, um eine zuverlässige Objekterkennung und -klassifikation zu gewährleisten.

Der vorliegenden Erfindung liegt die Aufgabe zugrunde, ein Verfahren zur Erkennung von Objekten in zeitveränderlichen Aufnahmen einer optisch übervachten Szene anzugeben, das mit vertretbarem Verarbeitungsaufwand eine zuverlässige Erkennung von Objekten ermöglicht.

Die Erfindung ist im Patentanspruch 1 beschrieben. Die Unteransprüche enthalten vorteilhafte Ausgestaltungen und Weiterbildungen der Erfindung.

Die Erfindung ermöglicht mit geringem Bildverarbeitungsaufwand eine zuverlässige Erkennung und Separation von Objekten. Die Farbe als Merkmal ist einfach auszuwerten und ist gegenüber der Bewegung eines Objekts eine in besonderem Maße beständige Eigenschaft. Die Erfindung liefert präzise Bewegungsvektoren für die farblich einheitlichen Flächen. Vorteilhaft ist die einfache und zuverlässige Bestimmung von Bewegungsobjekten durch Zusammenfassung von benachbarten Flächen mit übereinstimmenden oder ähnlichen Bewegungsvektoren. Die Beschreibung der farblich einheitlichen Flächen durch Parameter ermöglicht eine besonders einfache Zuordnung entsprechender Flächen in zeitlich aufeinanderfolgenden Aufnahmen und insbesondere über einen Flächenschwerpunkt oder ein ähnliches Merkmal eine einfache und präzise Bestimmung der Bewegungsvektoren.

Die Farbinformation liegt in den digitalisierten Bilddaten in Form von diskreten Farbwerten vor, die z.B. als Farbvektor w mit rot-, Grün- und Blau-Komponenten $w = (r,g,b)$ darstellbar sind. Die Anzahl verschiedener Farben bei der Ermittlung farbig einheitlicher Flächen bestimmt den Aufwand bei der Verarbeitung der Bilddaten und die Flächenauflösung einer Aufnahme. Während bei einer zu geringen Anzahl verschiedener Farben u.U. verschiedene Objekte nicht mehr zuverlässig getrennt werden, kann eine große Anzahl verschiedener Farben zu einer sehr starken Flächen-Zergliederung der Aufnahme mit entsprechend hohem Verarbeitungsaufwand führen. Die Anzahl der Farben kann im Einzelfall zur Optimierung der Objekterkennung anpaßbar sein. Als vorteilhaft hat sich z.B. die Wahl von sechzehn verschiedenen Farben erwiesen.

Die Farbauflösung nach der Anzahl möglicher diskreter Farbwerte ist für gebräuchliche farbfähige Bildaufnahmesensoren wesentlich höher als die für die Ermittlung farblich einheitlicher Flächen zweckmäßige Anzahl verschiedener Farben. Es ist in einem solchen Fall vorteilhaft, jeweils eine Mehrzahl von Farbwerten gruppenweise zu einer Farbe im Sinne der Bestimmung einheitlich gefärbter Flächen zusammenzufassen. Vorzugsweise wird hierfür die Art der Zusammenfassung nicht durch eine feste Zuordnung einzelner Farbwerte zu einer von mehreren Gruppen vorgegeben, sondern aus der Farbverteilung einer oder mehrerer Original-Aufnahmen des jeweiligen Einsatzfalles adaptiv bestimmt. So kann z.B eine Zusammenfassung von mehreren Farbwerten zu einer Farbe dadurch erfolgen, daß in dem mehrdimensionalen Farbraum mehrere Referenz-Farben definiert werden und die einzelnen Farbwerte derjenigen Referenz-Farbe zugeordnet werden, zu welcher der Vektorabstand im Farbraum am geringsten ist. Die Referenz-Farben sind vorzugsweise adaptiv so gelegt, daß sie eine optimale Repräsentation der gegebenen Farbverteilung darstellen. Dies kann als Cluster-Bildung im mehrdimensionalen Farbraum betrachtet werden, wobei insbesondere der technische bedeutsame 3-dimensionale Farbraum mit Rot-, Grün- und Blau-Werten in Betracht kommt. Eine für Echtzeit-Bildverarbeitung geeignete Cluster-Technik ist z.B. in [10] beschrieben.

Vorteilhaft ist auch, die Anzahl der verschiedenen Farben adaptiv auf der Basis der gegebenen Farbverteilung in den Original-Aufnahmen festzulegen, wodurch die je nach Situation unterschiedliche Anzahl signifikanter, zur Repräsentation geeigneter Farben berücksichtigt werden kann.

Zur Ermittlung zusammenhängender Flächen einheitlicher Farbe sind geeignete Verfahren an sich bekannt, z.B. ein in [11] beschriebener schneller Algorithmus, mit dem jeweils die Randlinie einer einheitlich gefärbten Fläche bestimmbar ist. Mit geringem Zusatzaufwand können dabei auch weitere Merkmale der jeweiligen einheitlich gefärbten Fläche, insbesondere Flächenschwerpunkt, Flächeninhalt und ein durch Zeilen- und Spaltengrenzen umbeschriebenes Rechteck als Parameter der jeweiligen Fläche ermittelt werden. Ebenso können räumliche Nachbarschaftsbeziehungen festgestellt und gespeichert werden.

Für die Gewinnung der Bewegungsinformation aus zeitlich aufeinanderfolgenden Aufnahmen ist die richtige Zuordnung von einander entsprechenden Flächen in verschiedenen Aufnahmen von wesentlicher Bedeutung. Die Flächenbeschreibung durch Parameter ist hierfür besonders vorteilhaft. Die Zuordnung von Flächenerfolgt dann vorzugsweise durch Bildung von Differenzen gleichartiger Parameter und Schwellwertsetzung für die einzelnen Differenzen oder für Kombinationen mehrerer Differenzwerte, ggf. mit unterschiedlicher Gewichtung. Zur Entscheidung, ob eine Fläche A aus einer ersten Aufnahme und eine Fläche B aus einer zweiten, zeitlich verschobenen Aufnahme einander entsprechen, kommen als Bewertungsgrößen insbesondere in Betracht

a) die Fardifferenz $DC_{AB}$ ausgedrückt z.B. als Betrag der Differenz der Farbvektoren $W_A$ und $W_B$

$$DC_{AB} = |\ W_A - W_B\ |\quad W = (r,g,b)$$

b) relative Differenz $DA_{AB}$ der Flächeninhalte $A_A$ und $A_B$

$$DA_{AB} = |\ \frac{A_A - A_B}{A_A}\ |$$

c) Abweichung DS der Seitenverhältniss $S_A$, $S_B$ der umschreibenden Rechtecke, z.B.

$$DS_{AB} = |\ \frac{S_A - S_B}{S_A + S_B}\ |$$

jeweils mit durch Indizes A bzw. B ausgedruckter Flächenzugehörigkeit, sowie Kombinationen davon, z.B.

$$D_{AB} = W_C \cdot DC_{AB} + W_A \cdot DA_{AB} + W_S \cdot DS_{AB}$$

mit Wi als Gewichtungsfaktoren für die einzelnen Bewertungsgrößen. Das wichtigste Ähnlichkeitsmerkmal ist in Folge der erfindungsgemäßen Flächenermittlung die Farbe der verglichenen Flächen, so daß die Farbdifferenz als vorrangiges Bewertungskriterium separat eine Schwellwertvergleich unterzogen wird oder mit starker relativer Gewichtung in eine kombinierte Bewertungsgröße, z.B. $D_{AB}$, eingeht.

Es ist ferner zweckmäßig, nur solche Flächen nach Kriterien der vorstehenden Art auf ihre gegenseitige Entsprechung zu überprüfen, deren Flächenschwerpunkte in zeitlich aufeinanderfolgenden Aufnahmen nicht um mehr als einen vorgebbaren Maximalabstand d auseinanderliegen. Die Flächenschwerpunkte können durch zweidimensionale Vektoren $g_A$, $g_B$ und der Abstand DF durch den Differenzbetrag $DF_{AB} = |\ g_A - g_B\ |$ ausgedrückt werden. Der Wert für den Maximalabstand d hängt sowohl von der maximal für zu detektierende Objekte zu erwartenden Bildverschibungsgeschwindigkeit als auch von der räumlichen Auflösung der Aufnahmen und dem Zeittakt aufeinanderfolgender Aufnahmen ab.

Eine Zuordnung einer bestimmten Flächen A in einer ersten Aufnahme zu einer Fläche B in einer zeitlich benachbarten zweiten Aufnahme kann unter Vorgabe eines Maximalabstands d wie vorstehend geschildert z.B. in der Weise erfolgen, daß aus der Gesamtmenge aller Flächen der zweiten Aufnahme eine Teilmenge der Flächen X, welche die Abstandsbedingung $|g_A - g_X| \leq d$ erfüllen ausgewählt wird, daß für alle Flächen dieser Teilmenge die Bewertungsgröße $D_{AX}$ für die Abweichung wie oben als $D_{AB}$ angegeben bestimmt wird und diejenige Fläche mit der geringsten Abweichung als die der Fläche A entsprechende Fläche B mit $D_{AB} = \min\{D_{AX}\}$ festgestellt wird.

Aus der Differenz der Schwerpunktvektoren ergibt sich direkt ein Bewegungsvektor $b_{AB} = g_B - g_A$ für die Fläche A nach B, der die Information über Betrag und Richtung der Flächenverschiebung enthält. Vorzugsweise werden die Bewegungsvektoren über mehrere aufeinanderfolgende Aufnahmen für die Bildung von Bewegungstrajektorien aneinandergereiht. Die Bewegungsvektoren und Bewegungstrajektorien repräsentieren nur die Flächenverschiebungen in der Bildfläche der Aufnahmen, nicht jedoch die davon zu unterscheidende räumliche Bewegung von beobachteten Objekten.

Das Verschmelzen, Einschließen, Teilen usw. von Flächen von einer Aufnahme zu einer folgenden kann eine Zuordnung entsprechender Flächen unmöglich machen. Dies kann zur Folge haben, daß sich die Anzahl der Flächen immer wieder ändert und daß die Verfolgung von zuvor bearbeiteten Flächen abgebrochen und die Verfolgung neu erkannter Flächen aufgenommen wird. Um eine falsche Zuordnung bei derartigen Umgestaltungen zu vermeiden, können für die Bewertungsgrößen $DC_{AB}$, $DS_{AB}$, $DA_{AB}$, $D_{AB}$ u.ä. Schwellwerte vorgegeben werden, bei deren Überschreiten keine Zuordnung vorgenommen wird. Durch Zuordnungsvergleich über mehrere Aufnahmetakte können lediglich in einer Aufnahme auftretende Flächenänderungen der vorstehenden Art überbrückt und ausgeglichen werden.

Mit der nach der Erfindung präzise ermittelbaren Bewegungsinformation zu zuverlässig separierten Bildteilen liegt ein wichtiges Unterscheidungsmerkmal als Vorverarbeitungsergebnis für eine nachfolgende Klassifikation vor.

Vorzugsweise werden zusammengehörige Flächen zu einem Bewegungsobjekt zusammengefaßt und als solches gemeinsam einer Objektklassifikation unterzogen. Für die Entscheidung über die Zusammengehörigkeit zweier zuvor getrennt bearbeiteter Flächen zu demselben Bewegungsobjekt ist vorrangig von Bedeutung, ob

a) die beiden Flächen unmittelbar oder in geringem Abstand benachbart sind; hierfür kann eine unmittelbare Nachbarschaft mit teilweise gemeinsamer Randlinie, eine mittelbare Nachbarschaft mit einer gemeinsamen unmittelbaren Nachbarschaftsfläche oder, vorzugsweise, die Überlappung der durch Zeilen- und Spaltengrenzen umbeschriebenen Rechtecke zur Bedingung gemacht werden

b) die Verschiebung der beiden Flächen hinreichend ähnlich ist; hierfür können die Bewegungsvektoren der beiden Flächen z.B. korreliert werden, wobei die Korrelation vorzugsweise über mehrere Aufnahmetakte hin vorgenommen wird; das Maß der Korreliertheit wird durch einen numerischen Wert ausgedrückt, der mit einem Schwellwert verglichen wird.

Aus den Bewegungsvektoren oder Bewegungstrajektorien aller zu demselben Objekt gehörenden Flächen kann durch mit Flächeninhalten gewichtete Mittelwertbildung ein objektbezogener Bewegungsvektor bzw. eine objektbezogene Bewegungstrajektorie gebildet werden, in gleicher Weise kann ein objektbezogener Flächenschwerpunkt gebildet werden. Eine von einem Bewegungsobjekt umfaßte Fläche kann aus dem Bewegungsobjekt herausgenommen werden, wenn sie die Bedingungen für die Zugehörigkeit nicht mehr erfüllt. Ebenso kann eine zuvor unabhängige Fläche in ein bestehendes Bewegungsobjekt mit aufgenommen werden. Ein Bewegungsobjekt kann in zwei oder mehr getrennte Objekte zerfallen, was insbesondere bei Annäherung an eine von größerer Distanz einheitlich erscheinende Objektgruppe auftritt.

Objekte oder Flächen mit vernachlässigbarer oder verschwindender Verschiebung in der Bildfläche können für die Hinderniserkennung als irrelevant eingestuft und von der weiteren Bearbeitung ausgenommen werden.

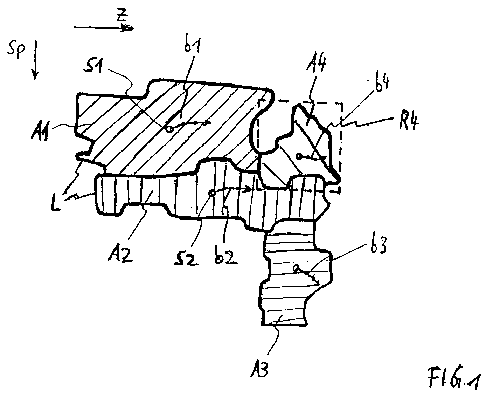

In FIG. 1 ist ein Ausschnitt aus einem Bild mit in Zeilen Z und Spalten Sp rasterförmig angeordneten Pixeln skizziert, in welchem vier Flächen A1, A2, A3, A4 mit durch unterschiedliche Schraffur dargestellten verschiedenen Farben erkennbar sind. Die Flächen sind durch Randlinien L eingegrenzt. Unmittelbar benachbarte Flächen haben gemeinsame Randlinienabschnitte, z.B. A1 und A2, A1 und A4, A2 und A4, A2 und A3. Für die Fläche F4 ist ein durch die Spaltengrenzen und Zeilengrenzen bestimmtes umbeschriebenes Rechteck R4 eingezeichnet. Jede der Flächen weist einen Flächenschwerpunkt S1 usw. auf. Die über mehrere Aufnahmetakte gemittelte Verschiebung der jeweiligen Flächenschwerpunkte ist durch Bewegungstrajektorien b1 usw. zu den Flächenschwerpunkten dargestellt. Bei der Bildung von Bewegungsobjekten erweisen sich die Bewegungstrajektorien zu den benachbarten Flächen F1 und F2 als sehr ähnlich, während die Bewegungstrajektorien zu F3 und zu F4 mit denen der übrigen Flächen unkorreliert erscheinen. Die Flächen F1 und F2 werden daher zu einem Bewegungsobjekt zusammengefaßt und z.B. bei einer nachfolgenden Objektklassifikation gemeinsam bearbeitet.

Die Erfindung ist nicht auf die vorliegend im Detail gegebenen Beispiele beschränkt. Insbesondere sind bezüglich der Flächenbeschreibung durch Parameter, der Entscheidung über die gegenseitige Zuordnung von Flächen aus zeitlich getrennt gewonnenen Bildern der Bildung von Bewegungsobjekten und der Verknüpfung von Bilddaten zur Gewinnung der Bewegungsvektoren zahlreiche Abwandlungen im Bereich fachmännischen Könnens möglich.

Literatur

[1]     Thomanek, F., Dickmanns, E.D. and Dickmanns, D., "Multiple Object Recognition and Scene Interpretation for Autonomous Road Vehicle Guidance," IEEE Symposium on Intelligent Vehicles, pp. 231-236, Paris, 1994

[2]     Schwarzinger, M, Zielke, T., Noll, D., Brauckmann, M., von Seelen, W., "Vision-Based Car -Following: Detection, Tracking, and Identification," IEEE Symposium on Intelligent Vehicles, pp. 24-29, Detroit, 1992

[3]     Saneyoshi, K., Hanawa, K., Kise, K., Sogawa Y., "3-D Recognition System for Drive Assist," IEEE Symposioum on Intelligent Vehicles, pp. 60-65, Tokyo, 1993

[4]     Brauckmann, M.E. Goerick, C., Groß, J. and Zielke, T., "Towards All Around Automatic Visual Obstacle Sensing for Cars," IEEE Symposium on Intelligent Vehicles, pp. 79-84, Paris, 1994

[5]     Kilger, M., "A shadow handler in a video-based real-time traffic monitoring system," Proc. IEEE Workshop on Applications of Computer Vision, Palm Springs, CA, pp. 1060-1066, 1992

[6]     Horn, B.K.P. and Schunck, B., "Determining optical flow," Artificial Intell., vol. 17, pp.185-203, 1981

[7]     Weng, J., Ahuja, N., Huang, T.S., "Matching two perspective views," IEEE Trans. Pattern Analysis and Machine Intelligence, vol. PAMI 14, no. 8, pp. 806-825, 1992

[8]     Koller, D., Heinz, N.; Nagel, H.-H., "Algorithmic characterization of vehicle trajectories from image sequences by motion verbs," Proc. IEEE Conf. Computer Vision and Pattern Recognition, Maui, HI, pp. 90-95, 1991

[9]     Wu, X., and Witten, I.H., "A fast k-means type clustering algorithm," Dept Computer Science, Univ. of Calgary, Canada, 1985

[10]    Mandler, E. and Oberländer, M., "One-pass Encoding of Connected Components in Multi-Valued Images," 10th International Conference on Pattern Recognition (ICPR), pp.64-69, Atlantic City, 1990

**Patentansprüche**

1.  Verfahren zur Erkennung von Objekten in zeitveränderlichen Aufnahmen einer optisch überwachten Szene, dadurch gekennzeichnet, daß die Bilder mehrfarbig aufgenommen werden, daß innerhalb eines Bildes zusammenhängende Flächen einheitlicher Farbe ermittelt werden und daß für einander entsprechende Flächen in zeitlich aufeinanderfolgenden Bildern jeweils ein Bewegungsvektor ermittelt wird.

2.  Verfahren nach Anspruch 1, dadurch gekennzeichnet, daß für die zusammenhängenden Flächen Parameter ermittelt und zur Bildfolgenauswertung herangezogen werden.

3.  Verfahren nach Anspruch 2, dadurch gekennzeichnet, daß als Parameter neben Farbe der Flächeninhalt und/oder der Flächenschwerpunkt bestimmt wird.

4.  Verfahren nach einem der Ansprüche 1 bis 3, dadurch gekennzeichnet, daß aus den Bewegungsvektoren einander entsprechender Flächen über mehrere aufeinanderfolgende Bilder Bewegungstrajektorien gebildet werden.

5.  Verfahren nach einem der Ansprüche 1 bis 4, dadurch gekennzeichnet, daß angrenzende Flächen mit ähnlichen Bewegungsvektoren oder Bewegungstrajektorien zu Bewegungsobjekten zusammengefaßt werden.

6.  Verfahren nach Anspruch 5, dadurch gekennzeichnet, daß zu einem Bewegungsobjekt jeweils ein Bewegungsvektor oder eine Bewegungstrajektorie aus den Bewegungsvektoren bzw. Bewegungstrajektorien der objektbildenden Flächen abgeleitet wird.

7.  Verfahren nach einem der Ansprüche 1 bis 6, dadurch gekennzeichnet, daS die Aufnahmen mit einer eine erste Anzahl diskreter Farbwerte umfassenden Farbauflösung aufgenommen und jeweils mehrere Farbwerte in gruppenweiser Zusammenfassung als gleichfarbig weiterverarbeitet werden.

8. Verfahren nach Anspruch 7, dadurch gekennzeichnet, daß die Art der gruppenweisen Zusammenfassung aus der Farbwertverteilung einer oder mehrerer Aufnahmen abgeleitet wird.

9. Verfahren nach einem der Ansprüche 5 bis 8, dadurch gekennzeichnet, daß ein Klassifikator auf die Bewegungs-objekte angewandt wird.

FIG.1